# EUROPEAN PATENT APPLICATION

(11) **EP 4 723 179 A1**
(43) Date of publication of application: **08.04.2026**
(21) Application number: 23856749.9
(22) Date of filing: 20.09.2023
(51) Int. Cl.: H01M 4/04, H01M 4/02, H01M 4/13, H01M 4/139, H01M 10/04

(54) **MANUFACTURING METHOD FOR BATTERY ELECTRODE SHEET, BATTERY ELECTRODE SHEET, AND BATTERY**

(30) Priority: 30.05.2023 CN 202310620463; 30.05.2023 CN 202321344604 U
(71) Applicant: HUIZHOU EVE POWER CO., LTD, Huizhou, Guangdong 516039 (CN)
(72) Inventor: WANG, Chao, Huizhou, Guangdong 516039 (CN); ZENG, Hanmin, Huizhou, Guangdong 516039 (CN); HE, Wei, Huizhou, Guangdong 516039 (CN); LIU, Jincheng, Huizhou, Guangdong 516039 (CN)
(74) Representative: Tiburzi, Andrea
(86) International application number: PCT/CN2023/119915
(87) International publication number: WO 2024/041664

(57) **Abstract**

Provided are a method for manufacturing a battery electrode sheet, a battery electrode sheet, and a battery. The battery electrode sheet includes a current collector (1), a first coating (2) and a second coating (3) which are disposed on one side surface of the current collector (1). The method for manufacturing the battery electrode sheet includes the following: one side surface of the current collector is divided into a first region and a second region; and the first region and the second region are coated by controlling a coater to form a first coating in the first region and a second coating in the second region, where the areal density of the first coating is greater than the areal density of the second coating. According to the manufacturing method for the battery electrode sheet, the manufactured battery electrode sheet and the manufactured battery, the flow guide channel for the circulation of electrolyte is reserved on the current collector in the coating process, the manufacturing method is simple and feasible, the problem of electrolyte infiltration in a cell and the problem of uneven distribution of the electrolyte caused by expansion of the electrode sheet during use of the cell are solved, whereby the high energy density of the battery is achieved while optimizing both the fast-charging performance and the service life.

## Description

The present disclosure claims priority to Chinese Patent Application No. 202310620463.7, filed with the China National Intellectual Property Administration (CNIPA) on May 30, 2023, and claims priority to Chinese Patent Application No. 202321344604.9, filed with the CNIPA on May 30, 2023, the disclosures of which are incorporated herein by reference in their entireties.

### TECHNICAL FIELD

The present invention relates to the technical field of power batteries, such as a method for manufacturing a battery electrode sheet, a battery electrode sheet, and a battery.

### BACKGROUND

High energy density, high fast-charging performance, and long lifespan are the main development directions of power batteries. In the related art, the electrode sheet of the power battery has its thickness increased to improve the active material loading, thereby increasing the energy density of the power battery. However, on the one hand, it is difficult for the thick electrode sheet to be infiltrated by the electrolyte, which affects the transmission speed of the electrolyte. On the other hand, during the use of the power battery, the thick electrode sheet is more prone to expansion, and the electrolyte in the electrode sheet is easily squeezed out under compression, resulting in uneven distribution of the electrolyte; thus, the fast-charging performance and the service life of the power battery are limited.

### SUMMARY

The present invention provides a method for manufacturing a battery electrode sheet, a battery electrode sheet, and a battery so that a flow guide channel for the circulation of electrolyte is reserved on the current collector in a coating process. The manufacturing method is simple and feasible, the problems of difficult infiltration and slow transmission speed of the electrolyte in a cell, and the problem of uneven distribution of the electrolyte caused by expansion of the electrode sheet during use of the cell are solved, whereby the high energy density of the battery is achieved while optimizing both the fast-charging performance and the service life.

In a first aspect, the present invention provides a method for manufacturing a battery electrode sheet. The method includes steps of:
dividing one side surface of a current collector into a first region and a second region;
coating the first region and the second region by controlling a coater to form a first coating in the first region and a second coating in the second region, where the areal density of the first coating is greater than the areal density of the second coating, the first coating and the second coating form a coating, and the second coating forms a flow guide channel on the coating;
disposing the flow guide channel in at least one of a first direction, a second direction, and a third direction, where the second direction and the first direction are disposed at an included angle, and the first direction is perpendicular to the third direction; and
disposing, when a plurality of flow guide channels are provided, at least part of the plurality of flow guide channels to be at least one of spaced apart or intersected, and disposing a flow guide channel of the plurality of flow guide channels at an intermediate position of the one side surface of the current collector or making at least one end of a flow guide channel of the plurality of flow guide channels extend to an edge of the one side surface of the current collector.

In an embodiment, after coating the first region and the second region by controlling the coater, the method further comprises a step of:
compacting the first coating and the second coating to satisfy any one of the following conditions:
the thickness of the second coating is not greater than the thickness of the first coating;
the compaction density of the second coating is not greater than the compaction density of the first coating; and
the thickness of the second coating is not greater than the thickness of the first coating, and the compaction density of the second coating is not greater than the compaction density of the first coating.

In an embodiment, the method further includes steps of:
dividing the other side surface of the current collector into a third region and a fourth region; and
coating the third region and the fourth region by controlling the coater to form a third coating in the third region and a fourth coating in the fourth region, where the areal density of the third coating is greater than the areal density of the fourth coating.

In a second aspect, the present invention provides a battery electrode sheet. The battery electrode sheet is manufactured by the method for manufacturing the battery electrode sheet described above and includes the current collector, the first coating, and the second coating. One side surface of the current collector includes the first region and the second region, the first coating is disposed in the first region, the second coating is disposed in the second region, the first coating and the second coating form the coating disposed on the one side surface of the current collector, the areal density of the first coating is greater than the areal density of the second coating, and the second coating forms the flow guide channel on the coating.

In an embodiment, the other side surface of the current collector is provided with a uniform coating; or the other side surface of the current collector is divided into a third region and a fourth region, the third region is provided with a third coating, the fourth region is provided with a fourth coating, and the areal density of the third coating is greater than the areal density of the fourth coating.

In an embodiment, the areal density of the third coating is 0.6 to 1.4 times the areal density of the first coating.

In an embodiment, the second coating at least partially overlaps with the fourth coating in a direction perpendicular to the current collector.

In an embodiment, when the other side surface of the current collector is provided with the uniform coating, a ratio of a projection area of the second coating on the current collector to a total surface area of the current collector ranges from 0.0001 to 0.5; or in a case where the other side surface of the current collector is provided with the third coating and the fourth coating, a ratio of a sum of projection areas of the second coating and the fourth coating on the current collector to a total surface area of the current collector ranges from 0.0001 to 0.5.

In an embodiment, the other side surface of the current collector is provided with the third coating and the fourth coating, and the coating formed by the first coating and the second coating and a coating formed by the third coating and the fourth coating are symmetrically or asymmetrically disposed on two sides of the current collector.

In an embodiment, a single side of the current collector is provided with one or more layers of coating in the thickness direction, and the one or more layers of the coating are formed by the first coating and the second coating.

In an embodiment, the first coating and the second coating are configured to satisfy any one of the following conditions:
the thickness of the second coating is not greater than the thickness of the first coating;
the compaction density of the second coating is not greater than the compaction density of the first coating; and
the thickness of the second coating is not greater than the thickness of the first coating, and the compaction density of the second coating is not greater than the compaction density of the first coating.

In an embodiment, the areal density S₁ of the first coating is not greater than 600 g/m², the thickness H₁ of the first coating is not greater than 500 um, and the compaction density P₁ of the first coating is not greater than 4.2 g/cc.

The areal density S₂ of the second coating is not greater than 400 g/m², the thickness H₂ of the second coating is not greater than 300 um, and the compaction density P₂ of the second coating is not greater than 4.0 g/cc; or the areal density S₂ of the second coating is not greater than 400 g/m², the thickness H₂ of the second coating is not greater than 500 um, and the compaction density P₂ of the second coating is not greater than 2.0 g/cc.

In an embodiment, the thickness of the first coating is greater than the thickness of the second coating, and a ratio of the thickness of the second coating to the thickness of the first coating ranges from greater than zero to less than 0.995.

In an embodiment, the thickness of the first coating is greater than the thickness of the second coating, a groove is formed between the first coating and the second coating, and a cross-sectional shape of the groove is arc-shaped or rectangular or trapezoidal-like.

In an embodiment, a ratio of the areal density of the second coating to the areal density of the first coating ranges from greater than zero to less than 0.99.

In an embodiment, the coating is provided with one or more flow guide channels.

In an embodiment, the coating is provided with multiple flow guide channels; and at least part of the multiple flow guide channels are spaced apart, or at least part of the multiple flow guide channels are intersected.

In an embodiment, one side surface of the current collector is provided with one second coating; and the second region is located at an intermediate position of the current collector, or at least one end of the second region extends to an edge of the current collector.

In an embodiment, one side surface of the current collector is provided with multiple second coatings spaced apart, and each second coating is disposed on one second region.

Multiple second regions are configured to satisfy any one of the following conditions:
the multiple second regions are located at the intermediate position of the current collector;
at least one end of at least one second region extends to an edge of the current collector; and
at least one end of at least one second region extends to an edge of the current collector, and the remaining second regions are located at the intermediate position of the current collector.

In an embodiment, in a case where the battery electrode sheet serves as a positive electrode sheet of a cell, materials of the first coating and the second coating include at least one of a ternary positive electrode, an iron-lithium positive electrode, or a sodium ion positive electrode.

In a case where the battery electrode sheet serves as a negative electrode sheet of a cell, materials of the first coating and the second coating include at least one of artificial graphite, natural graphite, hard carbon, soft carbon, silicon, or a metal-like material capable of forming an alloy with lithium sodium.

In an embodiment, the first coating and the second coating are coated on the side surface of the current collector.

Alternatively, the battery electrode sheet further includes at least one intermediate coating, the at least one intermediate coating is disposed on the side surface of the current collector, and the first coating and the second coating are coated on a surface of the at least one intermediate coating facing away from the current collector.

In a third aspect, the present invention provides a battery. The battery includes a positive electrode sheet, a negative electrode sheet, and a separator disposed between the positive electrode sheet and the negative electrode sheet, and at least one of the positive electrode sheet or the negative electrode sheet is the battery electrode sheet described above.

In an embodiment, in a case where the positive electrode sheet is the battery electrode sheet, a ratio of the areal density of the second coating to the areal density of the first coating ranges from greater than zero to less than 0.99.

Alternatively, in a case where the negative electrode sheet is the battery electrode sheet, a ratio of the areal density of the second coating to the areal density of the first coating ranges from greater than 0.8 to less than 0.99.

Alternatively, in a case where the positive electrode sheet and the negative electrode sheet are each the battery electrode sheet and the positive electrode sheet and the negative electrode sheet located on two sides of the same separator have no overlap between the second coating of the positive electrode sheet and the second coating of the negative electrode sheet in a direction perpendicular to the separator, a ratio of the areal density of the second coating of the positive electrode sheet to the areal density of the first coating of the positive electrode sheet ranges from greater than 0 to less than 0.99, and a ratio of the areal density of the second coating of the negative electrode sheet to the areal density of the first coating of the negative electrode sheet ranges from greater than 0.8 to less than 0.99.

Alternatively, the positive electrode sheet and the negative electrode sheet are each the battery electrode sheet, in a case where the positive electrode sheet and the negative electrode sheet located on two sides of the same separator have an overlap between the second coating of the positive electrode sheet and the second coating of the negative electrode sheet in a direction perpendicular to the separator, 40%min{the area of the second region of the positive electrode sheet, the area of the second region of the negative electrode sheet} ≤ the overlap area ≤ max{the area of the second region of the positive electrode sheet, the area of the second region of the negative electrode sheet}, a ratio of the areal density of the second coating of the positive electrode sheet to the areal density of the first coating of the positive electrode sheet ranges from greater than 0.01 to less than 0.99, and a ratio of the areal density of the second coating of the negative electrode sheet to the areal density of the first coating of the negative electrode sheet ranges from greater than 0.4 to less than 0.99.

The beneficial effects of the present invention are as follows.

According to the manufacturing method for the battery electrode sheet, the battery electrode sheet and the battery provided in the present invention, for the battery electrode sheet manufactured by the manufacturing method for the battery electrode sheet, the first coating and the second coating are formed on one side surface of the current collector, and the areal density of the first coating is greater than the areal density of the second coating, where the second coating is the flow guide channel. Through the above-described steps, the flow guide channel for the circulation of electrolyte can be reserved on the current collector in the coating process, and only areal densities of coatings in different regions need to be changed, such that the manufacturing method is simple and feasible.

By forming the flow guide channel on the coating, the electrolyte can circulate more readily in the flow guide channel, such that the high energy density of the battery, the fast-charging performance, and the service life of the battery can be balanced, while the problem of difficult electrolyte infiltration can be solved.

When multiple flow guide channels are provided, the plurality of flow guide channels are located at the intermediate position of the side surface of the intermediate current collector, or at least one end of each flow guide channel extends to the edge of the side surface of the current collector. Exemplarily, three scenarios may be listed: the plurality of flow guide channels are located at the intermediate position; one end of each flow guide channel extends to the edge; and two ends of the multiple flow guide channels extend to the edge. The flow guide channels are linear, curved, or closed-line shaped, the shapes of the flow guide channels may be the same, partially the same, or quite different, and the shape of each flow guide channel can adopt one of the above-described shapes. The battery electrode sheet is connected to the cell in the first direction, and the flow guide channels are disposed in the first direction and/or in the second direction and/or in the third direction, where the second direction and the first direction are disposed at an included angle, and the first direction is perpendicular to the third direction. At least part of the flow guide channels are spaced apart and/or at least part of the flow guide channels are intersected; exemplarily, the following scenarios are included: all the flow guide channels are intersected, all the flow guide channels are spaced apart, and part of the flow guide channels are intersected and the other part of the flow guide channels are spaced apart. When the above scenarios are combined, a variety of combinations may be obtained. The greater the number of flow guide channels and the more dispersed their structure, the more conducive it is to the transfer of electrolyte, thereby improving the fast-charging cycle performance of the cell.

### BRIEF DESCRIPTION OF THE DRAWINGS

FIG. 1 is a schematic view of a first battery electrode sheet according to an embodiment of the present invention.
FIG. 2 is a side view of a second battery electrode sheet according to an embodiment of the present invention.
FIG. 3 is a top view of a third battery electrode sheet according to an embodiment of the present invention.
FIG. 4 is a top view of a fourth battery electrode sheet according to an embodiment of the present invention.
FIG. 5 is a top view of a fifth battery electrode sheet according to an embodiment of the present invention.
FIG. 6 is a top view of a sixth battery electrode sheet according to an embodiment of the present invention.
FIG. 7 is a top view of a seventh battery electrode sheet according to an embodiment of the present invention.
FIG. 8 is a top view of an eighth battery electrode sheet according to an embodiment of the present invention.
FIG. 9 is a top view of a ninth battery electrode sheet according to an embodiment of the present invention.
FIG. 10 is a top view of a tenth battery electrode sheet according to an embodiment of the present invention.
FIG. 11 is a flowchart of a method for manufacturing a battery electrode sheet according to an embodiment of the present invention.
FIG. 12 is a schematic view of a laminated cell according to an embodiment of the present invention, in which only the positive electrode uses a battery electrode sheet.
FIG. 13 is a schematic view of a laminated cell according to an embodiment of the present invention, in which both the positive electrode and the negative electrode use a battery electrode sheet.

In the drawings: 1, current collector; 2, first coating; 3, second coating; 4, third coating; 5, fourth coating; 6, groove; 100, positive electrode sheet; 200, negative electrode sheet; 300, separator

### DETAILED DESCRIPTION

In the description of the present invention, unless otherwise expressly specified and limited, the term "connected to each other", "connected", or "fixed" is to be construed in a broad sense, for example, as securely connected, or detachably connected, or integrated; mechanically connected or electrically connected; directly connected to each other, indirectly connected to each other via an intermediary, internally communicated with each other between two elements, or interacted with each other between two elements. For those of ordinary skill in the art, specific meanings of the preceding terms in the present invention may be understood based on specific situations.

In the present invention, unless otherwise expressly specified and limited, a first feature being "on" or "under" a second feature may include the first feature and the second feature being in direct contact, or may also include the first feature and the second feature not being in direct contact but being in contact with each other through an additional feature therebetween. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

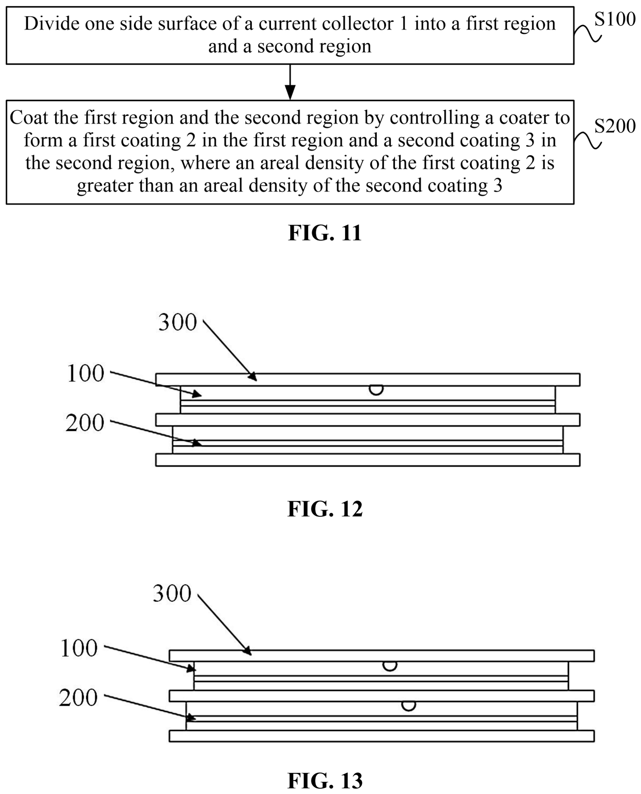

An embodiment provides a battery. As shown in FIGS. 12 and 13, the battery includes a positive electrode sheet 100, a negative electrode sheet 200, and a separator 300 disposed between the positive electrode sheet 100 and the negative electrode sheet 200. Among them, the positive electrode sheet 100, the negative electrode sheet 200, and the separator 300 may be a laminated cell or a jelly-roll cell to form the battery. The battery may be a soft pack battery, a square battery, or a cylindrical battery. This embodiment further provides a battery electrode sheet. The positive electrode sheet 100 and/or the negative electrode sheet 200 adopts the battery electrode sheet of this embodiment.

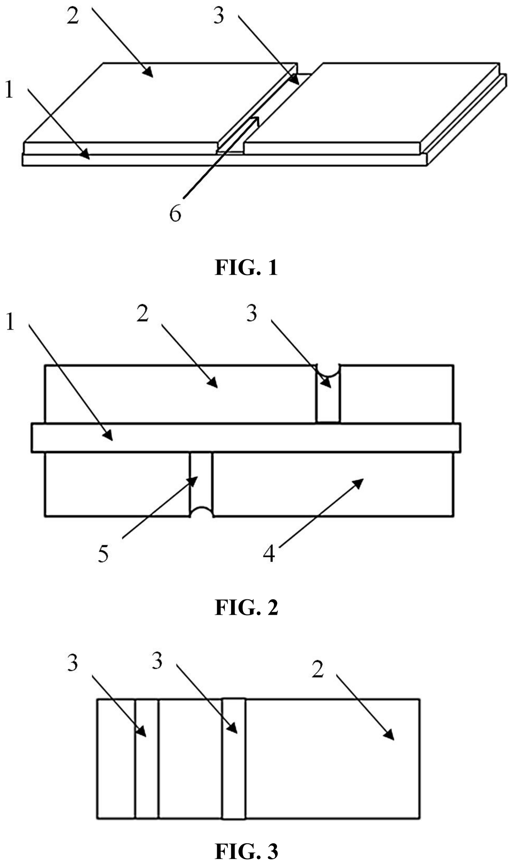

As shown in FIG. 1, the battery electrode sheet includes a current collector 1 and coatings disposed on two sides of the current collector 1, and the coating of at least one of the two sides is provided with a flow guide channel.

In a first aspect, when the coating on a first side of the current collector 1 is provided with the flow guide channel and a second side of the current collector 1 is provided with a uniform coating, the coating on the first side includes a first coating 2 and a second coating 3. The first coating 2 and the second coating 3 are disposed in two regions (a first region and a second region) of one side surface of the current collector 1, respectively. The areal density of the first coating 2 is S1, and the areal density of the second coating 3 is S2, where S2 < S1. The flow guide channel is formed by reducing the areal density of the local coating, i.e., the second coating 3, on the coating, and electrolyte circulates more easily on the second coating 3 with a lower areal density, that is, the second coating 3 forms the flow guide channel on the coating.

In a second aspect, when the first side of the current collector 1 is provided with a uniform coating and the coating on the second side of the current collector 1 is provided with the flow guide channel, the other side surface of the current collector 1 is divided into a third region and a fourth region. The coating on the second side includes a third coating 4 and a fourth coating 5. The third region is provided with the third coating 4, and the fourth region is provided with the fourth coating 5, where the areal density of the third coating 4 is greater than the areal density of the fourth coating 5. Electrolyte circulates more easily on the fourth coating 5 with a lower areal density, that is, the fourth coating 5 forms the flow guide channel on the coating.

In a third aspect, the coatings on the two sides of the current collector 1 are each provided with the flow guide channel.

Optionally, the areal density of the third coating 4 is 0.6 to 1.4 times the areal density of the first coating 2, to avoid an excessive difference in the dosage of active materials between the coatings on the two sides of the current collector 1, which may affect the performance of a cell.

The coating may be disposed directly on the surface of the current collector 1. Alternatively, an intermediate coating may be disposed between the coating and the surface of the current collector 1. For example, the first coating 2 and the second coating 3 are both disposed on the surface of the same intermediate coating.

The electrolyte can circulate in the flow guide channel so that the problem that the expansion of the active materials affects the immersion and liquid retention capacity of the electrolyte during use of the cell can be solved. The side surface of the current collector 1 is provided with the coating, which ensures the active material loading, and achieves the high energy density of the battery while optimizing the fast-charging performance and the service life.

Optionally, a ratio of the areal density of the second coating 3 to the areal density of the first coating 2 ranges from greater than zero to less than 0.99. Alternatively, the ratio of the areal density of the second coating 3 to the areal density of the first coating 2 ranges from greater than 0.1 to less than 0.9. For example, the areal density ratio is 0.2, 0.3, 0.4, 0.5, 0.6, 0.7, or 0.8. The larger the areal density ratio, the smaller the space formed by the flow guide channels, which is unfavorable to the transferring of electrolyte. However, the smaller the ratio, the less the active materials in the electrode sheet, which affects the capacity of the cell.

In an embodiment, the thickness of the first coating 2 is H1, and the thickness of the second coating 3 is H2, where H2 ≤ H1; that is, the second coating 3, which has a smaller thickness on the coating, forms a groove 6. This can ensure that the electrolyte may be rapidly transferred along the groove 6 in the cell and stored in the cell, thereby forming the flow guide channel. Optionally, the thickness of the first coating 2 is greater than the thickness of the second coating 3, and a ratio of the thickness of the second coating 3 to the thickness of the first coating 2 ranges from greater than zero to less than 0.995. Alternatively, a ratio of the thickness of the second coating 3 to the thickness of the first coating 2 ranges from greater than 0.2 to less than 0.9. For example, the thickness ratio is 0.3, 0.4, 0.5, 0.6, 0.7, or 0.8. The larger the thickness ratio, the smaller the space of the flow guide channel, which is unfavorable to the transferring of electrolyte and has no obvious effect on the fast-charging and circulation improvement of the cell. However, the smaller the ratio, the less the active materials in the electrode sheet, which affects the capacity of the cell. Optionally, the thickness of the first coating 2 is greater than the thickness of the second coating 3, and the groove 6 is formed between the first coating 2 and the second coating 3, and the cross-sectional shape of the groove 6 is arc-shaped, or rectangular, or trapezoidal-like.

In another embodiment, the compaction density of the first coating 2 is P1, and the compaction density of the second coating 3 is P2, where P2 ≤ P1. Since the compaction density of the first coating 2 is different from the compaction density of the second coating 3, the electrolyte is easier to transfer due to the large number of pores in the second coating 3 in a lower compaction region, thereby forming the flow guide channel. The thickness of the first coating 2 may be the same as or different from the thickness of the second coating 3, which is not limited thereto. The first coating 2 and the second coating 3 may be reached to have the same thickness through a cold pressing, and different compactions can be achieved by adjusting the areal density. The larger the difference between P2 and P1, the higher the porosity in the coating at the flow guide channel, the more conducive it is to the transfer of the electrolyte, which can effectively improve the fast-charging cycle performance of the cell.

The flow guide channel may exist only in the coating on one side of the current collector 1 or in the coatings on two sides of the current collector 1 simultaneously. A total projection area of the flow guide channel on the current collector 1 is A2, and the total surface area of the current collector 1 is A, where A2/A ranges from 0.0001 to 0.5. Exemplarily, if the uniform coating is disposed on a single side of the current collector 1, the projection area of the second coating 3 on the current collector 1 is A2, when the two sides of the current collector 1 are each provided with the flow guide channel, a sum of the projection areas of the second coating 3 and the fourth coating 5 on the current collector 1 is A2. This avoids the situation that the flow guide channel occupies an excessively large area, thereby affecting the active material loading, and also avoids a transfer failure of electrolyte due to an excessively small occupied area, thereby affecting the improvement effect on the fast-charging performance and cycle performance of the cell. Optionally, A2/A ranges from 0.001 to 0.3, and A2/A ranges from 0.01 to 0.1, such as 0.0001, 0.0005, 0.001, 0.005, 0.01, 0.05, 0.1, and 0.5.

As shown in FIG. 2, when the coatings on the two sides of the current collector 1 are each provided with the flow guide channel, the coatings on the two sides are symmetrically/asymmetrically disposed on the two sides of the current collector 1. Exemplarily, one side surface of the current collector 1 is provided with the first coating 2 and the second coating 3, the other side surface of the current collector 1 is provided with the third coating 4 and the fourth coating 5, and a coating formed by the first coating 2 and the second coating 3 and a coating formed by the third coating 4 and the fourth coating 5 are symmetrically/asymmetrically disposed on the two sides of the current collector 1. The flow guide channels on the two sides of the current collector 1 may be in the same vertical direction of the current collector 1 or in different vertical directions, that is, staggered up and down. That is, the shape, size, position, distribution, and quantity of the flow guide channels in the coatings on the two sides of the current collector 1 may be the same or different. The structure of the flow guide channels on the two sides can increase the uniformity of the distribution of the flow guide channels in the cell, provide more transfer channels for the electrolyte, and enhance the improvement effect on the fast-charging cycle performance of the cell. However, an excessive number of flow guide channels on the two sides may increase the difficulty of processing, reduce the active material loading, and affect the capacity exertion. Optionally, the second coating 3 at least partially overlaps with the fourth coating 5 in a direction perpendicular to the current collector 1.

The number of flow guide channels on the coating is not limited; that is, the number of flow guide channels on the two sides of the current collector 1 is not limited. As shown in FIG. 2, each of the coatings on the two sides of the current collector 1 is provided with one flow guide channel. The number and arrangement of flow guide channels on one side of the current collector 1 are used as an example for illustration. In an embodiment, as shown in FIG. 1, the coating is provided with one flow guide channel. In another embodiment, as shown in FIGS. 3 to 10, the coating is provided with multiple flow guide channels. As shown in FIG. 3, the coating is provided with two flow guide channels. In other embodiments, the coating is provided with three, four, or more than five flow guide channels. The greater the number of the flow guide channels, the more dispersed the structures of the flow guide channels are, and the more conducive it is to the transfer of electrolyte. This, in turn, improves the fast-charging cycle performance of the cell. However, when an excessive number of flow guide channels are provided, on the one hand, the processing difficulty of the electrode sheet can be increased, and on the other hand, the capacity of the cell can be reduced.

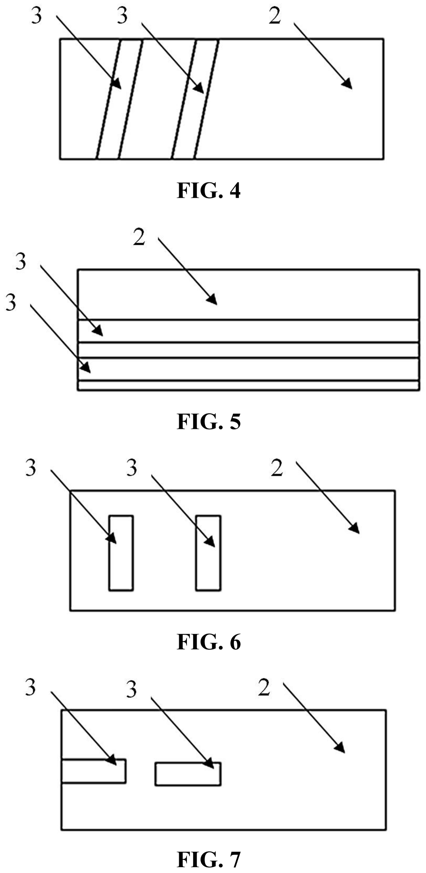

The position of the flow guide channel on the coating is not limited. In one embodiment, as shown in FIGS. 1 to 5 and FIG. 7, the flow guide channel extends to an edge of the coating. As shown in FIG. 7, the flow guide channel may also extend to one edge of the coating. As shown in FIG. 3, the flow guide channel may also extend to two edges of the coating. In an embodiment, as shown in FIG. 6, the flow guide channel is located in an intermediate position of the coating. When multiple flow guide channels are provided, one end of one of the flow guide channels extends to the edge of the coating, and two ends of each flow guide channel of the rest flow guide channels extend to the edge of the coating. Alternatively, two ends of each flow guide channel do not extend to the edge of the coating, that is, all the flow guide channels are located in the intermediate position of the coating. That is, for the multiple flow guide channels located on the same coating, the position of each flow guide channel may be any combination of the above situations, which is not limited hereto.

The second region where the second coating 3 is located is rectangular, and correspondingly, the projection of the flow guide channel on the current collector 1 is rectangular. The length of the first region where the first coating 2 is located is not greater than the length of the second region, and the width of the first region is not greater than the width of the second region.

The shape of the flow guide channel in the coating is not limited. As shown in FIGS. 1 to 3, the flow guide channel is disposed in a first direction, and the battery electrode sheet is connected to the cell in the first direction, that is, the direction of the flow guide channel is the same as the direction of the battery electrode sheet, and the flow guide channel is disposed in a linear shape. As shown in FIG. 4, the flow guide channel is disposed in a second direction, and the battery electrode sheet is connected to the cell in the first direction, where the second direction and the first direction are disposed at an included angle; for example, the included angle is an acute angle, that is, the flow guide channel is disposed obliquely. As shown in FIG. 5, the flow guide channel is disposed in a third direction, and the battery electrode sheet is connected to the cell in the first direction, where the first direction is perpendicular to the third direction. The flow guide channel may have a shape of a curve, a closed curve, or the like.

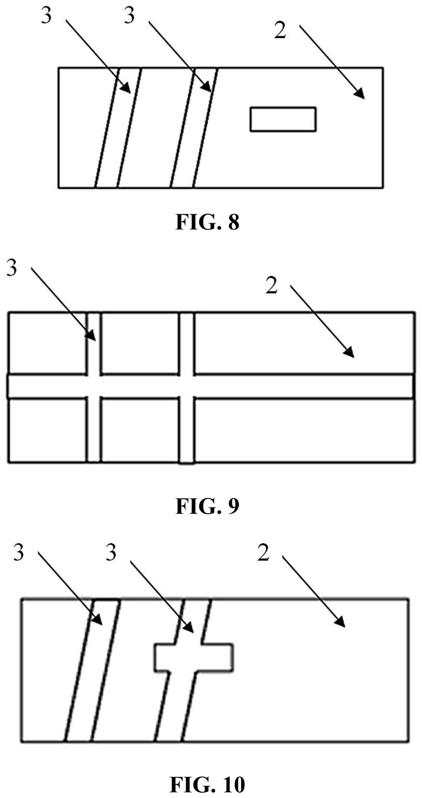

In an embodiment, as shown in FIGS. 3 to 10, the coating is provided with the multiple flow guide channels. As shown in FIGS. 3 to 8, at least part of the flow guide channels are spaced apart. As shown in FIGS. 9 and 10, at least part of the flow guide channels are intersected. As shown in FIG. 9, the flow guide channels communicate with each other. Alternatively, as shown in FIG. 1, part of the flow guide channels communicate with each other.

In an embodiment, the multiple flow guide channels are disposed in the first direction, and the multiple flow guide channels are distributed at equal intervals, or the multiple flow guide channels are distributed at unequal intervals. In an embodiment, the multiple flow guide channels are disposed in the second direction, and the multiple flow guide channels are distributed at equal intervals, or the multiple flow guide channels are distributed at unequal intervals. In an embodiment, the multiple flow guide channels are disposed in the third direction, and the multiple flow guide channels are distributed at equal intervals, or the multiple flow guide channels are distributed at unequal intervals. The above three examples may also be arbitrarily combined, for example, one flow guide channel in the third direction and two flow guide channels in the first direction are provided, and the three flow guide channels are intersected each other; or three flow guide channels in the third direction and two flow guide channels in the first direction are provided; or one flow guide channel in the third direction and three flow guide channels in the second direction are provided; or two flow guide channels in the third direction and three flow guide channels in the second direction, which is not limited hereto. All of the above flow guide channels extend to the edge of the coating or part of the flow guide channels extend to the edge of the coating. The above flow guide channels disposed in two directions are all intersected or partially intersected.

The width and length dimensions of the flow guide channel are not limited.

A single side of the current collector 1 is provided with one or more layers of coatings in a thickness direction of the current collector, which may be selected according to the requirements. Exemplarily, one side of the current collector 1 is provided with one or more layers of coatings formed by the first coating 2 and the second coating 3 in the thickness direction. The other side of the current collector 1 is provided with one or more layers of coatings formed by the third coating 4 and the fourth coating 5 in the thickness direction.

When the positive electrode sheet 100 adopts the above-described battery electrode sheet, the coating is one of a ternary positive electrode layer, an iron-lithium positive electrode layer, or a sodium ion positive electrode layer. When the negative electrode sheet 200 adopts the battery electrode sheet described above, the coating is one of an artificial graphite layer, a natural graphite layer, a hard carbon layer, a soft carbon layer, a silicon layer, and a layer made of a metal-like material capable of forming an alloy with lithium sodium.

In a first example, when only the positive electrode sheet 100 is the battery electrode sheet, the ratio of the areal density of the second coating 3 to the areal density of the first coating 2 ranges from more than zero to less than 0.99.

In a second example, when only the negative electrode sheet 200 is the battery electrode sheet, the ratio of the areal density of the second coating 3 to the areal density of the first coating 2 ranges from more than 0.8 to less than 0.99.

In a third example, the positive electrode sheet 100 and the negative electrode sheet 200 are each the battery electrode sheet, the positive electrode sheet 100 and the negative electrode sheet 200 located on the two sides of the same separator 300 do not have an overlap between the second coating 3 of the positive electrode sheet 100 and the second coating 3 of the negative electrode sheet 200 in the direction perpendicular to the separator 300, a ratio of the areal density of the second coating 3 of the positive electrode sheet 100 to the areal density of the first coating 2 of the positive electrode sheet 100 ranges from greater than 0 to less than 0.99, and a ratio of the areal density of the second coating 3 of the negative electrode sheet 200 to the areal density of the first coating 2 of the negative electrode sheet 200 ranges from greater than 0.8 to less than 0.99.

In a fourth example, the positive electrode sheet 100 and the negative electrode sheet 200 are each the battery electrode sheet, the positive electrode sheet 100 and the negative electrode sheet 200 located on the two sides of the same separator 300 have an overlap between the second coating 3 of the positive electrode sheet 100 and the second coating 3 of the negative electrode sheet 200 in the direction perpendicular to the separator 300, 40%min{the area of the second region of the positive electrode sheet 100, the area of the second region of the negative electrode sheet 200} ≤ the overlap area ≤ max{the area of the second region of the positive electrode sheet 100, the area of the second region of the negative electrode sheet 200}, a ratio of the areal density of the second coating 3 of the positive electrode sheet 100 to the areal density of the first coating 2 of the positive electrode sheet 100 ranges from greater than 0.01 to less than 0.99, and a ratio of the areal density of the second coating 3 of the negative electrode sheet 200 to the areal density of the first coating 2 of the negative electrode sheet 200 ranges from greater than 0.4 to less than 0.99.

The more the flow guide channels, the better the fast-charging performance and the cycle performance of the cell, but the higher the processing difficulty and the lower the capacity.

Exemplarily, S1 ≤ 600 g/m2, H1 ≤ 500 um, P1 ≤ 4.2 g/cc. When the battery electrode sheet is the positive electrode sheet, S2 ≤ 400 g/m2, H2 ≤ 300 um, and P2 ≤ 4.0 g/cc. When the battery electrode sheet is the negative electrode sheet, S2 ≤ 400 g/m2, H2 ≤ 500 um, and P2 ≤ 2.0 g/cc.

The flow guide channel formed on the battery electrode sheet of the present invention has the following beneficial effects.
1. During the use of the battery, the electrode sheet expands under stress, and the electrolyte is squeezed out of the electrode sheet. The flow guide channel may store the extruded electrolyte, thereby reducing the accumulation of the electrolyte around the electrode sheet and preventing lithium plating failure caused by uneven reactions, which is particularly effective in a large-format power battery.
2. The flow guide channel provides expansion space for the electrode sheet, thereby alleviating the extrusion force applied on the material during the expansion of the electrode sheet, reducing material crushing, and improving the life of the battery.
3. The flow guide channel accelerates the infiltration speed of the electrolyte, thereby improving the production efficiency.
4. The flow guide channel may provide storage and diffusion spaces for gases generated during the use of the cell, thereby facilitating prompting gases inside the cell to be quickly extruded to two ends of the cell, solving the problem of poor contact between electrode sheets, and improving the reliability of the battery.

This embodiment provides a method for manufacturing a battery electrode sheet. The method is used for manufacturing the battery electrode sheet described above. As shown in FIG. 11, the method includes the following steps:
S100, dividing one side surface of a current collector 1 into a first region and a second region.
S200, coating the first region and the second region by controlling a coater to form a first coating 2 in the first region and a second coating 3 in the second region, where the areal density of the first coating 2 is greater than the areal density of the second coating 3.

The battery electrode sheet produced by the method for manufacturing the battery electrode sheet includes the first coating 2 and the second coating 3 formed on a side surface of the current collector 1, where the areal density of the first coating 2 is greater than the areal density of the second coating 3. The second coating 3 is the flow guide channel. Through the above-described steps, the flow guide channel for the circulation of the electrolyte can be reserved on the current collector 1 in the coating process, and only areal densities of coatings in different regions need to be changed, such that the manufacturing method is simple and feasible.

In an aspect, a slot may be disposed on the current collector 1, then a coating is carried out with the same thickness, and a channel is formed at the position of the slot. However, it is quite difficult to machine the slot on the current collector 1, and the problem of foil breakage is likely to occur. Additionally, the slot may be covered or blocked by the coating, thereby failing to achieve rapid transferring of the electrolyte. In an aspect, some uncoated regions may be reserved on the current collector 1 to form the channel as well.

The step in which the coater is controlled to coat the first region and the second region includes the following.

S221, coating the first region by controlling the coater with a first feeding amount and the second region with a second feeding amount, where the first feeding amount is greater than the second feeding amount.

Coating with different areal densities in different regions can be achieved in the following two manners.

One manner is that the die of the coater is provided with a first slurry outlet and a second slurry outlet, and the coater is provided with power pumps for transferring the slurry. The first slurry outlet is larger than the second slurry outlet. The step in which the coater is controlled to coat the first region and the second region includes the following.

S2211, controlling the pump speeds of the power pumps to be the constant; coating the first region with the first feeding amount through the first slurry outlet and the second region with the second feeding amount through the second slurry outlet.

The die of the coater is changed to have slurry outlets of different opening sizes; for example, slurry openings of the same size may be provided, and a gasket is disposed on one slurry outlet to reduce its opening size. Alternatively, a scraper blade may be disposed on the die, and the scraper blade may scrape away part of the slurry to reduce the areal density of the coating in the second region. The structural change of the die is relatively small, which makes it convenient to achieve.

As shown in FIGS. 1 to 3, when the direction of the flow guide channel is the direction of the electrode sheet, that is, when the flow guide channel is disposed longitudinally, the second coatings 3, i.e., the flow guide channels with different sizes and quantities can be constructed by adjusting the die of the coater and adding gaskets or scraper blades of different sizes.

The other manner is that the coater is provided with a power pump for transferring the slurry. The step in which the coater is controlled to coat the first region and the second region includes the following.

S2212, coating, by controlling the power pump, the first region at a first pump speed and the second region at a second pump speed, where the first pump speed is greater than the second pump speed.

Coatings with different areal densities in different regions can be achieved in the above-described manner, that is, it can be achieved only by adjusting the feeding amount of the coater without modifying the die.

As shown in FIG. 5, when the direction of the flow guide channel is the direction perpendicular to the electrode sheet, that is, when the flow guide channel is disposed horizontally, the coating can be controlled by controlling the magnitude of the pump speed of the coater. The width of the flow guide channel, i.e., the second coating 3, is adjusted by adjusting the time during which the second region is coated at the second pump speed.

After the coater is controlled to coat the first region and the second region, the method further includes the following.

S300, compacting the first coating 2 and the second coating 3 so that the thickness of the second coating 3 is not greater than the thickness of the first coating 2, and/or the compaction density of the second coating 3 is not greater than the compaction density of the first coating 2. The first coating 2 and the second coating 3 may be compacted by a cold pressing or hot pressing, which is not limited in the present invention.

When the coatings on two sides of the current collector 1 are each provided with the flow guide channel, the method for manufacturing the battery electrode sheet further includes the steps described below.

S400, dividing the other side surface of the current collector 1 into a third region and a fourth region.

S500, coating the third region and the fourth region by controlling the coater to form a third coating 4 in the third region and a fourth coating 5 in the fourth region, where the areal density of the third coating 4 is greater than the areal density of the fourth coating 5. After one side of the current collector 1 is coated, the other side of the current collector 1 is coated. The devices and processes may be the same.

## Claims

1. A method for manufacturing a battery electrode sheet, comprising:
dividing one side surface of a current collector (1) into a first region and a second region;
coating the first region and the second region by controlling a coater, and forming a first coating (2) in the first region and a second coating (3) in the second region, wherein an areal density of the first coating (2) is greater than an areal density of the second coating (3), the first coating (2) and the second coating (3) form a coating, and the second coating (3) forms a flow guide channel on the coating;
disposing the flow guide channel in at least one of a first direction, a second direction, and a third direction, wherein the second direction and the first direction are set at an included angle, and the first direction is perpendicular to the third direction; and
disposing, when a plurality of flow guide channels are provided, at least part of the plurality of flow guide channels to be at least one of spaced apart or intersected, and disposing a flow guide channel of the plurality of flow guide channels at an intermediate position of the one side surface of the current collector (1) or making at least one end of a flow guide channel of the plurality of flow guide channels extend to an edge of the one side surface of the current collector (1).

2. The method for manufacturing the battery electrode sheet of claim 1, wherein after coating the first region and the second region by controlling the coater, the method further comprises:
compacting the first coating (2) and the second coating (3) to satisfy one of the following conditions:
a thickness of the second coating (3) being not greater than a thickness of the first coating (2);
a compaction density of the second coating (3) being not greater than a compaction density of the first coating (2); and
a thickness of the second coating (3) being not greater than a thickness of the first coating (2), and a compaction density of the second coating (3) being not greater than a compaction density of the first coating (2).

3. The method for manufacturing the battery electrode sheet of claim 1 or 2, further comprising:
dividing another side surface of the current collector (1) into a third region and a fourth region; and
coating the third region and the fourth region by controlling the coater to form a third coating (4) in the third region and a fourth coating (5) in the fourth region, wherein an areal density of the third coating (4) is greater than an areal density of the fourth coating (5).

4. A battery electrode sheet, manufactured by the method for manufacturing the battery electrode sheet of any one of claims 1 to 3 and comprising the current collector (1), the first coating (2) and the second coating (3), wherein the one side surface of the current collector (1) comprises the first region and the second region, the first coating (2) is disposed in the first region, the second coating (3) is disposed in the second region, the first coating (2) and the second coating (3) form the coating disposed on the one side surface of the current collector (1), the areal density of the first coating (2) is greater than the areal density of the second coating (3), and the second coating (3) forms the flow guide channel on the coating.

5. The battery electrode sheet of claim 4, wherein
another side surface of the current collector (1) is provided with a uniform coating; or
another side surface of the current collector (1) is divided into a third region and a fourth region, the third region is provided with a third coating (4), the fourth region is provided with a fourth coating (5), and an areal density of the third coating (4) is greater than an areal density of the fourth coating (5).

6. The battery electrode sheet of claim 5, wherein the areal density of the third coating (4) is 0.6 to 1.4 times the areal density of the first coating (2).

7. The battery electrode sheet of claim 5, wherein the second coating (3) at least partially overlaps with the fourth coating (5) in a direction perpendicular to the current collector (1).

8. The battery electrode sheet of claim 5, wherein
when another side surface of the current collector (1) is provided with the uniform coating, a ratio of a projection area of the second coating (3) on the current collector (1) to a total surface area of the current collector (1) ranges from 0.0001 to 0.5; or
when another side surface of the current collector (1) is provided with the third coating (4) and the fourth coating (5), a ratio of a sum of projection areas of the second coating (3) and the fourth coating (5) on the current collector (1) to a total surface area of the current collector (1) ranges from 0.0001 to 0.5.

9. The battery electrode sheet of claim 5, wherein when another side surface of the current collector (1) is provided with the third coating (4) and the fourth coating (5), the coating formed by the first coating (2) and the second coating (3) and a coating formed by the third coating (4) and the fourth coating (5) are symmetrically or asymmetrically disposed on two sides of the current collector (1).

10. The battery electrode sheet of claim 4, wherein a single side of the current collector (1) is provided with one or more layers of coating in a thickness direction of the current collector (1), and the one or more layers of the coating are formed by the first coating (2) and the second coating (3).

11. The battery electrode sheet of claim 4, wherein the first coating (2) and the second coating (3) are configured to satisfy one of the following conditions:
a thickness of the second coating (3) being not greater than a thickness of the first coating (2);
a compaction density of the second coating (3) being not greater than a compaction density of the first coating (2); and
a thickness of the second coating (3) being not greater than a thickness of the first coating (2), and a compaction density of the second coating (3) being not greater than a compaction density of the first coating (2).

12. The battery electrode sheet of claim 11, wherein
the areal density Si of the first coating (2) satisfies S₁ ≤ 600 g/m², the thickness H₁ of the first coating (2) satisfies H₁ ≤ 500 um, and the compaction density P₁ of the first coating (2) satisfies P₁ ≤ 4.2 g/cc; and
the areal density S₂ of the second coating (3) satisfies S₂ ≤ 400 g/m², the thickness H₂ of the second coating (3) satisfies H₂ ≤ 300 um, and the compaction density P₂ of the second coating (3) satisfies P₂ ≤ 4.0 g/cc; or the areal density S₂ of the second coating (3) satisfies S₂ ≤ 400 g/m², the thickness H₂ of the second coating (3) satisfies H₂ ≤ 500 um, and the compaction density P₂ of the second coating (3) satisfies P₂ ≤ 2.0 g/cc.

13. The battery electrode sheet of claim 11, wherein the thickness of the first coating (2) is greater than the thickness of the second coating (3), and a ratio of the thickness of the second coating (3) to the thickness of the first coating (2) ranges from greater than zero to less than 0.995.

14. The battery electrode sheet of claim 11, wherein the thickness of the first coating (2) is greater than the thickness of the second coating (3), a groove (6) is formed between the first coating (2) and the second coating (3), and a cross-sectional shape of the groove (6) is arc-shaped or rectangular or trapezoidal.

15. The battery electrode sheet of claim 4, wherein a ratio of the areal density of the second coating (3) to the areal density of the first coating (2) ranges from greater than zero to less than 0.99.

16. The battery electrode sheet of claim 4, wherein the coating is provided with at least one flow guide channel.

17. The battery electrode sheet of claim 4, wherein the coating is provided with a plurality of flow guide channels; and
at least part of the plurality of flow guide channels are disposed to be spaced apart, or at least part of the plurality of flow guide channels are disposed to be intersected.

18. The battery electrode sheet of claim 16, wherein the one side surface of the current collector (1) is provided with one second coating (3); and
the second region is located at an intermediate position of the current collector (1), or at least one end of the second region extends to an edge of the current collector (1).

19. The battery electrode sheet of claim 16, wherein the one side surface of the current collector (1) is provided with a plurality of second coatings (3) spaced apart, and each second coating (3) is disposed on one second region; and
a plurality of second regions are configured to satisfy one of the following conditions:
the plurality of second regions are located at an intermediate position of the current collector (1);
at least one end of at least one second region extends to an edge of the current collector (1); and
at least one end of at least one second region extends to an edge of the current collector (1), and remaining second regions are located at an intermediate position of the current collector (1).

20. The battery electrode sheet of claim 4, wherein
in response to the battery electrode sheet serving as a positive electrode sheet (100) of a cell, materials of the first coating (2) and the second coating (3) comprise at least one of a ternary positive electrode, an iron-lithium positive electrode, or a sodium ion positive electrode; and
in response to the battery electrode sheet serving as a negative electrode sheet (200) of a cell, materials of the first coating (2) and the second coating (3) comprise at least one of artificial graphite, natural graphite, hard carbon, soft carbon, silicon, or a metal-like material capable of forming an alloy with lithium sodium.

21. The battery electrode sheet of claim 4, wherein
the first coating (2) and the second coating (3) are coated on the one side surface of the current collector (1); or
the battery electrode sheet further comprises at least one intermediate coating, the at least one intermediate coating is disposed on the one side surface of the current collector (1), and the first coating (2) and the second coating (3) are coated on a surface of the at least one intermediate coating facing away from the current collector (1).

22. A battery, comprising a positive electrode sheet (100), a negative electrode sheet (200), and a separator (300) disposed between the positive electrode sheet (100) and the negative electrode sheet (200), wherein at least one of the positive electrode sheet (100) or the negative electrode sheet (200) is the battery electrode sheet of any one of claims 4 to 21.

23. The battery of claim 22, wherein
in response to the positive electrode sheet (100) being the battery electrode sheet, a ratio of the areal density of the second coating (3) to the areal density of the first coating (2) ranges from greater than zero to less than 0.99; or
in response to the negative electrode sheet (200) being the battery electrode sheet, a ratio of the areal density of the second coating (3) to the areal density of the first coating (2) ranges from greater than 0.8 to less than 0.99; or
in response to the positive electrode sheet (100) and the negative electrode sheet (200) each being the battery electrode sheet, and in response to the positive electrode sheet (100) and the negative electrode sheet (200) located on two sides of a same separator (300) having no overlap between the second coating (3) of the positive electrode sheet (100) and the second coating (3) of the negative electrode sheet (200) in a direction perpendicular to the separator (300), a ratio of the areal density of the second coating (3) of the positive electrode sheet (100) to the areal density of the first coating (2) of the positive electrode sheet (100) ranges from greater than 0 to less than 0.99, and a ratio of the areal density of the second coating (3) of the negative electrode sheet (200) to the areal density of the first coating (2) of the negative electrode sheet (200) ranges from greater than 0.8 to less than 0.99; or
in response to the positive electrode sheet (100) and the negative electrode sheet (200) each being the battery electrode sheet, and in response to the positive electrode sheet (100) and the negative electrode sheet (200) located on two sides of a same separator (300) having an overlap between the second coating (3) of the positive electrode sheet (100) and the second coating (3) of the negative electrode sheet (200) in a direction perpendicular to the separator (300), 40%min{an area of the second region of the positive electrode sheet (100), an area of the second region of the negative electrode sheet (200)} ≤ an overlap area ≤ max{the area of the second region of the positive electrode sheet (100), the area of the second region of the negative electrode sheet (200)}, a ratio of the areal density of the second coating (3) of the positive electrode sheet (100) to the areal density of the first coating (2) of the positive electrode sheet (100) ranges from greater than 0.01 to less than 0.99, and a ratio of the areal density of the second coating (3) of the negative electrode sheet (200) to the areal density of the first coating (2) of the negative electrode sheet (200) ranges from greater than 0.4 to less than 0.99.
